# EUROPÄISCHE PATENTSCHRIFT

(11) **EP 0 452 272 B1**
(45) Veröffentlichungstag und Bekanntmachung des Hinweises auf die Patenterteilung: **05.04.1995**
(21) Anmeldenummer: 91810253.4
(22) Anmeldetag: 05.04.1991
(51) Int. Cl.: F16D 3/58, F16D 3/70, F16H 55/14

(54) **Elastische Kupplung**
Flexible coupling
Accouplement élastique

(30) Priorität: 10.04.1990 CH 1213/90
(43) Veröffentlichungstag der Anmeldung: 16.10.1991
(73) Patentinhaber: SLM Schweizerische Lokomotiv- und Maschinenfabrik AG, CH-8401 Winterthur (CH)
(72) Erfinder: Sambo, Claudio, CH-8400 Winterthur (CH)
(74) Vertreter: Trieblnig, Adolf

(56) Entgegenhaltungen:
- CH-A- 108 989
- CH-A- 378 604
- CH-A- 600 188
- DE-B- 1 012 129
- DE-B- 1 038 086
- DE-C- 850 097
- FR-A- 843 965
- GB-A- 504 582
- GB-A- 1 173 434
- GB-A- 2 073 370
- US-A- 2 659 244

## Beschreibung

Die Erfindung betrifft eine elastische Kupplung mit einem auf einer Welle anbringbaren inneren Antriebsteil und einem auf diesem in Umfangsrichtung beweglich gelagerten äusseren Antriebsteil sowie mit mehreren, in Umfangsrichtung gegeneinander versetzt angeordneten Kupplungselementen, welche je einen zwischen zwei Haltern angeordneten, elastisch verformbaren Federkörper enthalten und welche einen der Antriebsteile mit zwei beidseits desselben angeordneten, am anderen Antriebsteil von diesem abstehend befestigbaren ringscheibenartigen Wandteilen verbinden.

Aus der CH-PS 600 188 ist eine Kupplung bekannt, deren innerer Antriebsteil durch mehrere, von einer Nabenpartie radial abstehende, speichenartige Vorsprünge gebildet ist, während der äussere Antriebsteil eine auf diese Vorsprünge aufsetzbare Kranzpartie mit über deren inneren Umfang verteilt angeordneten, zahnartig nach innen abstehenden Vorsprüngen aufweist, welche in die zwischen den Vorsprüngen des inneren Antriebsteils gebildeten Lücken einführbar sind. Die Vorsprünge des äusseren Antriebsteils sind je über zwei beidseitig an ihre Stirnseiten anpressbare Kupplungselemente mit den benachbarten Vorsprüngen des inneren Antriebsteils in Umfangsrichtung nachgiebig verbunden. Die Kupplungselemente dieser bekannten Ausführung bestehen je aus zwei annähernd trapezförmigen Trägerplatten und einem zwischen diese einvulkanisierten, elastisch verformbaren Gummikörper, wobei jeweils die eine Trägerplatte gegen die betreffende Stirnseite des Vorsprungs des äusseren Antriebsteils verspannbar ist und die zweite Trägerplatte die zwischen den in beiden Umfangsrichtungen benachbarten Vorsprüngen des inneren Antriebsteils gebildete Lücke überbrückt und an den entsprechenden Stirnseiten dieser Vorsprünge des inneren Antriebsteils befestigt ist. Die bekannte Ausführung mit den nach Art einer Verzahnung ineinandergreifenden Vorsprüngen der beiden Antriebsteile erfordert einen relativ grossen Aufwand bei der Herstellung dieser relativ hoch belasteten Antriebsteile und beim Einbau der diese verbindenden Kupplungselemente, die ausser den in Umfangsrichtung wirkenden Kräften auch die über den Zahnkranz eingeleiteten Querkräfte aufnehmen müssen. Entsprechend können für den Zahneingriff unerwünschte Schiefstellungen auftreten. Durch die konstruktiv gegebenen Abmessungen der ineinandergreifenden Vorsprünge ist zudem eine relativ geringe Anzahl dieser Kupplungselemente bestimmt, so dass die einzelnen Kupplungselemente relativ hoch beansprucht werden.

Bei einer aus der DE-AS 10 38 086 bekannten Kupplung der eingangs genannten Art wirken der innere Antriebsteil und der äussere Antriebsteil über ballige Lagerflächen zusammen, durch welche der einen Zahnkranz tragende äussere Antriebsteil gegenüber der Nabe in Umfangsrichtung und rechtwinklig dazu verstellbar sein soll. Bei dieser bekannten Ausführung sind die als Mitnehmerscheiben ausgebildeten Wandteile am inneren Antriebsteil je in einem axialen Abstand von der auf dem inneren Antriebsteil gelagerten Nabenpartie des äusseren Antriebsteils angeordnet, so dass dieser sich rechtwinklig zur Umfangsrichtung unbehindert einstellen kann. Entsprechend werden auch bei dieser bekannten Kupplungsanordnung die Kupplungselemente nicht nur durch die in beiden Umfangsrichtungen wirkenden Antriebs- und Bremskräfte, sondern zusätzlich auch durch die in axialer Richtung wirkenden Querkräfte belastet. Die ein seitliches Ausweichen des Zahnkranzes zulassende Kupplungsanordnung dieser bekannten Ausführung ist somit für die Aufnahme grösserer Querkräfte, wie sie etwa bei der Verwendung von mit einer Schrägverzahnung versehenen Zahnkränzen auftreten, nicht geeignet.

Der Erfindung liegt die Aufgabe zugrunde, eine insbesondere in dieser Hinsicht verbesserte, universell einsetzbare Kupplung der eingangs genannten Art, in einer vereinfachten, leichteren Bauweise zu schaffen, welche einen erleichterten Ein- und Ausbau von gegenüber bisherigen Ausführungen günstiger beanspruchten Kupplungselementen gestattet.

Diese Aufgabe wird erfindungsgemäss durch die im kennzeichnenden Teil des Patentanspruchs 1 angegebenen Merkmale gelöst.

Die erfindungsgemäss ausgebildete Kupplung besteht aus einfach herstellbaren Teilen, grösstenteils Drehteilen, deren Zusammenbau einen relativ geringen Arbeitsaufwand erfordert. Durch die von örtlichen inneren Vorsprüngen freien zylindrischen Lagerflächen der beiden Antriebsteile ist, insbesondere im Vergleich zu Ausführungen mit speichenartigen Vorsprüngen, eine vorteilhaft geringe Beanspruchung auf Flächenpressung der zusammenwirkenden Antriebsteile und eine bedeutende Verminderung der unabgefederten Massen erzielbar. Zugleich wird durch die an die Wandteile anlegbaren Stützpartien eine eindeutige Querführung des äusseren Antriebsteils gewährleistet und damit eine zusätzliche Beanspruchtung der Kupplungselemente durch Querkräfte vermieden. Die erfindungsgemässe Kupplungsanordnung ist daher auch für Ausführungen mit schrägverzahnten Zahnrädern geeignet.

Ausgestaltungen der Erfindung sind in den abhängigen Patentansprüchen angegeben.

Weitere Einzelheiten ergeben sich aus der folgenden Beschreibung von in der Zeichnung schematisch dargestellten Ausführungsbeispielen der Erfindung, in Verbindung mit den Ansprüchen. Es zeigen:
- Fig. 1: eine erfindungsgemäss ausgebildete Kupplung in einem axialen Teilschnitt entsprechend der Linie I-I in Fig. 2;
- Fig. 2: die Kupplung nach Fig. 1 in einer Teilansicht;
- Fig. 3: eine weitere erfindungsgemäss ausgebildete Kupplung, in einem axialen Teilschnitt entsprechend der Linie III-III in der Fig. 4, in einer anderen Ausführungsform;
- Fig. 4: die Kupplung nach Fig. 3 in einer Teilansicht;
- Fig. 5 und 6: weitere erfindungsgemäss ausgebildete Kupplungen, je in einem axialen Teilschnitt und je in einer anderen Ausführungsform;
- Fig. 7: eine Teilansicht einer erfindungsgemäss ausgebildeten Kupplung in einer weiteren Ausführungsform.

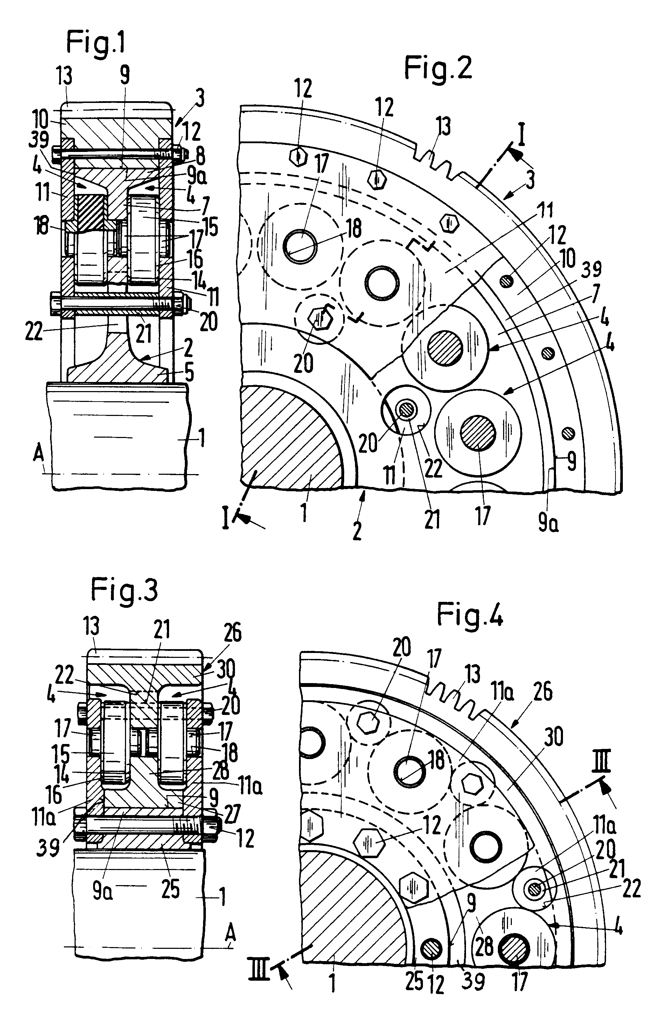

Die Kupplung nach den Figuren 1 und 2 ist in einer nur teilweise dargestellten Antriebseinrichtung eines Schienenfahrzeuges enthalten, welche zur Uebertragung des Drehmomentes eines nicht dargestellten Motors auf eine Radsatzachse, darstellungsgemäss eine Welle 1, des Schienenfahrzeuges bestimmt ist. Diese Antriebseinrichtung weist einen mit der Welle 1 drehfest verbundenen inneren Antriebsteil 2 und einen diesen umgebenden äusseren Antriebsteil 3 auf, der mit dem inneren Antriebsteil 2 über in Umfangsrichtung gegeneinander versetzt angeordnete, federnde Kupplungselemente 4 in Umfangsrichtung nachgiebig gekuppelt ist. Der innere Antriebsteil 2 enthält eine Nabenpartie 5, eine von dieser ringförmig nach aussen abstehende innere Wandpartie 7 und eine diese umgebende Flanschpartie 8, welche mit der Wandpartie 7, im Axialschnitt gesehen, einen T-förmigen Querschnitt begrenzt und welche eine über ihren ganzen Umfang durchgehende Lagerfläche 9 für den äusseren Antriebsteil 3 bildet.

Der äussere Antriebsteil 3 enthält eine ringförmige Kranzpartie 10, die mit einer Lagerfläche 9a auf der Flanschpartie 8 in Umfangsrichtung beweglich gelagert ist, und zwei gegen die Welle 1 hin abstehende Mitnehmerpartien in Form zweier ringscheibenartiger Wandteile 11, welche beidseits des inneren Antriebsteils 2, an Schulterpartien 39 der Flanschpartie 8 anlegbar, angeordnet und durch entlang ihrem äusseren Umfang verteilt angeordnete Schrauben 12 an der Kranzpartie 10 befestigt sind. Entsprechend ist die Kranzpartie 10 auf der Flanschpartie 8 durch die Wandteile 11 in axialer Richtung unverschiebbar gehalten. Die Kranzpartie 10 ist mit einer Verzahnung 13 versehen, die zum Eingriff in ein Zahnrad, z.B. ein nicht dargestelltes Ritzel des Antriebsmotors des Schienenfahrzeuges, bestimmt ist. Die Verzahnung 13 kann als Schrägverzahnung ausgeführt sein, wobei die entsprechenden, über die Kranzpartie 10 eingeleiteten Querkräfte jeweils über die Wandteile 11 unmittelbar auf den inneren Antriebsteil 2 und von diesem auf die Welle 1 übertragen werden. Die Kupplungselemente 4 werden daher durch diese Querkräfte nicht beansprucht.

Die Kupplungselemente 4 sind paarweise beidseits der Wandpartie 7 angeordnet und je mit zwei in axialer Richtung der Welle 1 einander gegenüberliegenden Abschnitten der quer, darstellungsgemäss senkrecht, zur Achse A der Welle 1 verlaufenden Stirnseiten der Wandpartie 7 und eines der Wandteile 11 verbunden. Die Kupplungselemente 4 enthalten je einen zylindrischen Federkörper 15 aus einem elastisch verformbaren, gummiartigen Material, der zwischen zwei Haltern 14 und 16 gehalten, z.B. eingeklebt oder einvulkanisiert, ist. Die Halter 14 und 16 sind je mit einer an die Wandpartie 7 bzw. den betreffenden Wandteil 11 anlegbaren kreisförmigen Stützplatte und einem von dieser nach aussen abstehenden Führungszapfen 17 ausgeführt. Die Wandpartie 7 und die Wandteile 11 sind je mit in Umfangsrichtung gegeneinander versetzt angeordneten, parallel zur Achse A der Welle 1 verlaufenden Bohrungen 18 ausgeführt, welche diese Führungszapfen 17 aufnehmen. Die beiden Wandteile 11 sind in ihren inneren Umfangsbereichen durch parallel zur Achse A angeordnete Schrauben 20 gegeneinander und/oder - über die Kupplungselemente 4 - gegen die Wandpartie 7 verspannbar gehalten. Die Schrauben 20 sind in Distanzstücken, darstellungsgemäss Stützrohren 21, angeordnet, welche je eine in der Wandpartie 7 vorgesehene Durchtrittsöffnung 22 durchsetzen. Die Durchtrittsöffnungen 22 sind je mit einem Durchmesser ausgeführt, der ungehinderte Relativbewegungen der mit den Wandteilen 11 verbundenen Stützrohre 21 in beiden Umfangsrichtungen, entsprechend einem vorbestimmten, grösstmöglichen Federweg des betreffenden Federkörpers 15, zulässt und der andererseits diese Relativbewegungen auf ein einem zulässigen Schubweg des Federkörpers 15 entsprechendes Mass begrenzen kann.

Durch die beschriebene Anordnung können die Wandteile 11 bis auf einen durch die Länge der Stützrohre 21 gegebenen Abstand gegeneinander und gegen die Wandpartie 7 verspannt werden, wobei eine aus einfach herstellbaren Teilen bestehende käfigartige Halterung für die Kupplungselemente 4 gebildet wird. Die je im äusseren und im inneren Umfangsbereich gehaltenen Wandteile 11 können mit relativ geringen Wandstärken ausgeführt sein, welche eine relativ schlanke Bauweise der Kupplung ermöglichen. Die einfach herstellbaren Kupplungselemente 4 können lose in die Halterung eingesetzt, mit geringem Arbeitsaufwand ausgewechselt und auf einfache Weise unter einer genau dosierbaren Vorspannung gehalten werden. Die von Querkräften im wesentlichen unbelasteten Kupplungselemente 4 können mit einer relativ geringen Quersteifigkeit ausgeführt sein und erfordern somit eine relativ geringe Vorspannung. Die beschriebene Anordnung ermöglicht ferner den Einbau einer relativ grossen Anzahl Kupplungselementen 4, welche je mit einer relativ geringen Schubsteifigkeit in Umfangsrichtung ausgeführt sein können, da die Summe der Schubsteifigkeiten der einzelnen Kupplungselemente 4 eine ausreichende Gesamtsteifigkeit aller Kupplungselemente 4 ergibt. Es hat sich gezeigt, dass bei einem Schienentriebfahrzeug mit einer auf die beschriebene Weise ausgeführten Kupplung die Gesamtheit der Kupplungselemente 4 eine über den ganzen Bereich der zu übertragenden Zugkraft, insbesondere der Anfahrzugkraft des Schienenfahrzeuges, eine im wesentlichen linear verlaufende Federkonstante aufweist, wobei die Beanspruchung der einzelnen Federkörper 15 relativ klein gehalten werden kann.

Die durch die Flanschpartie 8 gebildete, über deren ganzen Umfang verlaufende Lagerfläche 9 gestattet eine präzise Führung der Kranzpartie 10, wobei - insbesondere im Vergleich zu Ausführungen mit einer auf speichenartigen Stützpartien gelagerten Kranzpartie - eine wesentlich verringerte Beanspruchung auf Flächenpressung und eine verbesserte Schmierung der gleitenden Teile erzielt wird. Zugleich wird eine Deformation der über ihren ganzen inneren Umfang abgestützten Kranzpartie 10 vermieden.

Bei der Kupplung nach den Figuren 3 und 4 ist ein ringförmiger innerer Antriebsteil 25 mit einem äusseren Antriebsteil 26 gekuppelt, welcher eine auf dem Antriebsteil 25 in Umfangsrichtung beweglich gelagerte Nabenpartie 27, eine von dieser radial abstehende Wandpartie 28 und eine Flanschpartie 30 enthält, an der die Verzahnung 13 ausgebildet ist. Die Nabenpartie 27 ist mit ihren seitlichen Schulterpartien 30 zwischen zwei ringscheibenartigen Wandteilen 11a geführt, die mit ihren inneren Umfangspartien am inneren Antriebsteil 25 befestigt und mit ihren gegen die Flanschpartie 30 abstehenden äusseren Umfangsbereichen über die Stützrohre 21 gegeneinander und/oder über die Kupplungselemente 4 gegen die Wandpartie 28 verspannbar sind. Diese Ausführung ergibt eine Kupplung in einer kompakten, platzsparenden Bauweise, die insbesondere für die Ausbildung eines Triebzahnrades mit relativ kleinem Durchmesser geeignet ist. Dabei sind die genau zu bearbeitenden Lagerflächen 9 und 9a mit einem kleineren Durchmesser ausgeführt und daher entsprechend einfacher zu fertigen als bei der Kupplung nach den Figuren 1 und 2. Bei vergleichbaren Aussendurchmessern der äusseren Antriebsteile können ferner bei der Ausführung nach den Figuren 3 und 4 die Kupplungselemente 4 in einem grösseren radialen Abstand von der Achse A angeordnet und damit z.B. je mit einem grösseren Durchmesser ausgeführt und/oder für entsprechend kleinere Umfangskräfte ausgelegt werden.

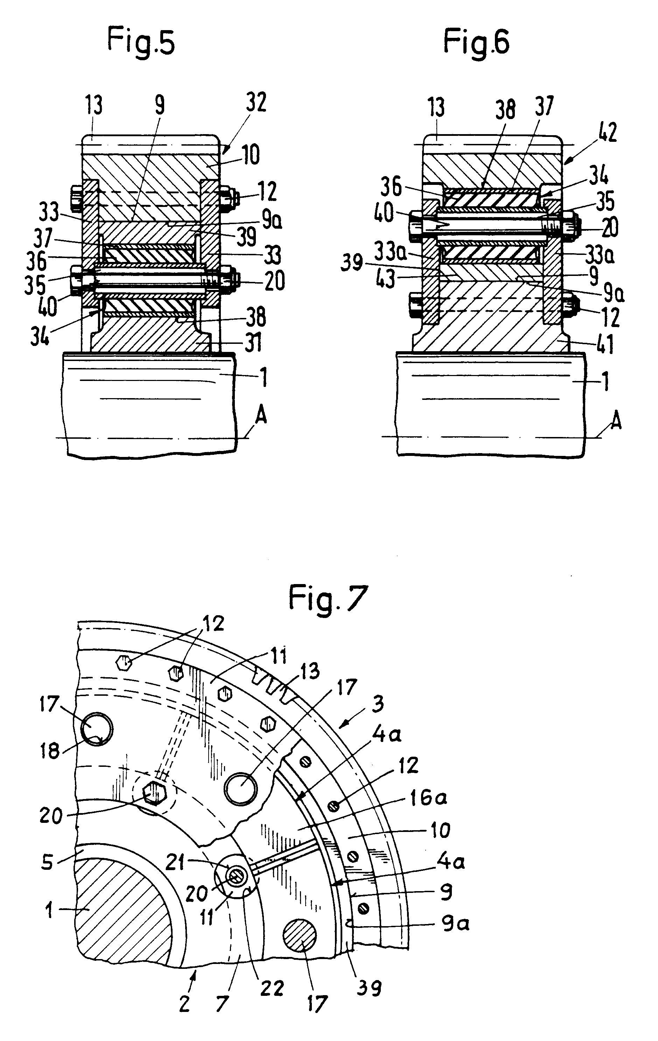

Bei den vorstehenden beschriebenen Ausführungen sind die Federkörper 15 der Kupplungselemente 4 im wesentlichen auf Schub beansprucht. Entsprechend der Darstellung nach Fig. 5 kann die Kranzpartie 10 eines äusseren Antriebsteils 32 auf einem annähernd ringförmigen inneren Antriebsteil 31 gelagert und mit diesem über zwei ringscheibenartige Wandteile 33 sowie über parallel zur Achse A angeordnete, in Umfangsrichtung gegeneinander versetzte zylindrische Kupplungselemente 34 gekuppelt sein, die im wesentlichen auf Druck beanspruchte Federkörper 36 aus Gummi oder einem entsprechenden, elastisch verformbaren Material aufweisen. Die Federkörper 36 sind rohrförmig ausgebildet und je zwischen zwei Haltern 35 und 37 in Form von konzentrisch angeordneten Rohrstücken befestigt, z.B. einvulkanisiert. Die Kupplungselemente 34 sind mit ihren äusseren Haltern 37 je in eine zur Achse A parallele Durchgangsbohrung 38 des inneren Antriebsteils 31 eingesetzt, z.B. eingepresst. Dabei sind die äusseren Halter 37 und die Federkörper 36 im Abstand von den Wandteilen 33 gehalten, welche je eine seitliche Führung für die Schulterpartie 39 des Antriebsteils 31 bilden und welche mittels der Schrauben 20 über die diese aufnehmenden, von den Federkörpern 36 beidseitig abstehenden inneren Halter 35 verspannbar sind. Darstellungsgemäss können die Enden der inneren Halter 35 je in eine am betreffenden Wandteil 33 ausgebildete Ausnehmung 40 ragen, in welcher das betreffende Ende in Umfangsrichtung feststehend gehalten ist. Diese Ausführung ergibt eine Kupplung mit relativ geringen Federwegen der Kupplungselemente 34 in einer gegenüber den Ausführungen nach den Figuren 1 bis 4 wesentlich vereinfachten Bauweise, welche insbesondere für Anwendungen geeignet ist, die eine relativ harte Federung in Umfangsrichtung erfordern.

Gemäss Fig. 6 können entsprechende Kupplungselemente 34 in Bohrungen 38 eines äusseren Antriebsteils 42 angeordnet sein, der mit einer Nabenpartie 43 auf einem auf der Welle 1 befestigten ringförmigen inneren Antriebsteil 41 gelagert ist. Die Nabenpartie 43 ist mit ihren Schulterpartien 39 zwischen zwei ringscheibenartigen Wandteilen 33a geführt, die mit ihren inneren Umfangspartien am inneren Antriebsteil 41 befestigt und mit ihren freien Umfangspartien über die inneren Halter 35 der Kupplungselemente 34 gegeneinander verspannbar sind. Bei dieser Ausführung können, im Vergleich zur Ausführung nach Fig. 5, die Kupplungsgelemente 34 auf einem grösseren Teilkreis angeordnet und damit für entsprechend geringere Umfangskräfte ausgelegt und/oder je mit einem relativ grossen Aussendurchmesser ausgeführt werden. Ferner sind die genau zu bearbeitenden Lagerflächen 9 und 9a mit einem kleineren Durchmesser ausgeführt und daher entsprechend einfacher zu fertigen als bei der Kupplung nach Fig. 5.

Die Kupplung nach Fig. 7 enthält in Umfangsrichtung eng aneinanderlegbare Kupplungselemente 4a mit Stützplatten 16a und dazwischen angeordneten Federkörpern 15, die darstellungsgemäss in Form von kongruenten Ringscheibensegmenten ausgebildet sein können. Diese Ausführung gestattet eine im wesentlichen lückenlose ringförmige Ueberdeckung der beiden Einbaubereiche für die lose einsetzbaren und über die Schrauben 20 vorspannbaren Kupplungselemente 4a. Entsprechende Kupplungselemente können auch in anderen, z.B. trapezartigen, Formen ausgeführt sein, die eine ringförmige Anordnung mit polygonalem Innen- und/oder Aussenumfang ergeben.

## Patentansprüche

1. Elastische Kupplung mit einem auf einer Welle (1) anbringbaren inneren Antriebsteil (2, 25, 31, 41) und einem auf diesem in Umfangsrichtung beweglich gelagerten äusseren Antriebsteil (3, 26, 32, 42) sowie mit mehreren, in Umfangsrichtung gegeneinander versetzt angeordneten Kupplungslementen (4, 4a, 34), welche je einen zwischen zwei Haltern (14 und 16; 35 und 37) angeordneten, elastisch verformbaren Federkörper (15, 36) enthalten und welche einen der Antriebsteile (2, 26, 31, 42) mit zwei beidseits desselben angeordneten, am anderen Antriebsteil (3, 25, 32, 41) von diesem abstehend befestigbaren ringscheibenartigen Wandteilen (11, 11a, 33, 33a) verbinden, dadurch gekennzeichnet, dass der innere Antriebsteil (2, 25, 31, 41) und der äussere Antriebsteil (3, 26, 32, 42) je mit einer im wesentlichen über den ganzen äusseren bzw. inneren Umfang durchgehend verlaufenden zylindrischen Lagerfläche (9 bzw. 9a) ausgeführt sind, und dass der zwischen die Wandteile (11, 33 bzw. 11a, 33a) ragende innere bzw. äussere Antriebsteil (2, 31 bzw. 26, 42) mit an die beiden Wandteile (11, 33 bzw. 11a, 33a) in axialer Richtung unverschiebbar anlegbaren, zur Uebertragung von Querkräften bestimmten Schulterpartien (39) ausgeführt ist.

2. Kupplung nach Anspruch 1, dadurch gekennzeichnet, dass die Wandteile (11, 11a) durch im Abstand von den Kupplungselementen (4, 4a), entlang ihren vom äusseren bzw. inneren Antriebsteil (3 bzw. 25) abstehenden, freien Umfangspartien verteilt angeordnete Befestigungsmittel (20) miteinander verbunden und über die Kupplungselemente (4, 4a) und/oder eine Anzahl Distanzstücke gegeneinander verspannbar gehalten sind, wobei diese Befestigungsmittel (20) je eine in dem zwischen die Wandteile (11, 11a) ragenden inneren bzw. äusseren Antriebsteil (2 bzw. 26) vorgesehene Durchtrittsöffnung (22) durchsetzen, welche das betreffende Befestigungsmittel (20) mit einem Relativbewegungen in Umfangsrichtung zulassenden Spiel umgibt.

3. Kupplung nach Anspruch 2, dadurch gekennzeichnet, dass die Distanzstücke durch zwischen die beiden Wandteile (11, 11a) einsetzbare Stützrohre (21) gebildet sind, welche je eines der Befestigungsmittel (20) aufnehmen.

4. Kupplung nach einem der vorangehenden Ansprüche, mit zwei beidseits des zwischen die Wandteile (11, 11a) ragenden Antriebsteils (2) angeordneten Reihen von Kupplungselementen (4, 4a), deren Halter (14 und 16) je eine an diesen Antriebsteil (2) bzw. den benachbarten Wandteil (11) anlegbare und an diesem befestigbare Stützplatte (16a) aufweisen, dadurch gekennzeichnet, dasss die Stützplatten (16a) und der Federkörper (15) jedes der Kupplungselemente (4) durch segmentförmige Ringscheibenteile gebildet sind (Fig. 7).

## Claims

1. Resilient coupling with an inner drive member (2, 25, 31, 41) which can be attached to a shaft (1) and with an outer drive member (3, 26, 32, 42) which is mounted on the inner drive member for movement in the circumferential direction, and with a plurality of coupling elements (4, 4a, 34) which are arranged offset from one another in the circumferential direction, and which each comprise a resiliently deformable spring member (15, 36) arranged between two holders (14 and 16; 35 and 37), and which connect one of the drive members (2, 26, 31, 42) with two ring disc-like wall parts (11, 11a, 33, 33a) which are arranged on both sides of the same and which can be attached to the other drive member (3, 25, 32, 41) in a manner projecting from it,
characterised in that
the inner drive member (2, 25, 31, 41) and the outer drive member (3, 26, 32, 42) are each executed with a cylindrical bearing surface (9, 9a) which substantially extends along the entire outer perimeter or inner perimeter respectively, and that the respective inner or outer drive member (2, 31 or 26, 42) which projects between the wall parts (11, 33 or 11a, 33a) is designed with shoulder portions (39) which can contact the two wall parts (11, 33 or 11a, 33a) in an axially non-displaceable manner for the transmission of transverse forces.

2. Coupling in accordance with claim 1,
characterised in that
the wall parts (11, 11a) are connected to one another by fastener means (20) arranged distributed along the free peripheral portion of the wall parts (11, 11a) projecting from the outer or inner drive member (3 or 25) at a distance from the coupling elements (4, 4a), and are clampingly held together via the coupling elements (4, 4a) and/or via a plurality of distance pieces, wherein these fastener means (20) each pass through an opening (22) which is provided in the inner or outer drive members (2 or 26) which project between the wall parts (11, 11a), with the opening (22) surrounding the respective fastener member (20) with a clearance which allows relative movements in the circumferential direction.

3. Coupling in accordance with claim 2,
characterised in that
the distance pieces are formed by support tubes (21) which can be inserted between the two wall parts (11, 11a), with the support tubes (21) each accommodating one fastener member (20).

4. Coupling in accordance with one of the preceding claims, with two rows of coupling elements (4, 4a) which are arranged on both sides of the drive member (2) projecting between the wall parts (11, 11a), with the holders (14 and 16) of the coupling elements (4, 4a) each having a support plate (16a) which can contact and be attached to this drive member (2) and/or contact and be attached to the neighbouring wall part (11),
characterised in that
the support plates (16a) and the spring member (15) of each coupling element (4) are formed by segment-shaped ring disc parts (Fig. 7).

## Revendications

1. Accouplement élastique comprenant une pièce d'entraînement intérieure (2, 25, 31, 41), qui peut être montée sur un arbre (1), et une pièce d'entraînement extérieure (3, 26, 32, 42), qui est montée sur la précédente avec possibilité de déplacement dans le sens circonférentiel, ainsi que plusieurs éléments d'accouplement (4, 4a, 34) qui sont disposés de manière décalée les uns par rapport aux autres dans le sens circonférentiel, qui renferment chacun un corps formant ressort (15, 36) déformable élastiquement disposé entre deux supports (14 et 16 ; 35 et 37), et qui relient l'une des pièces d'entraînement (2, 26, 31, 42) à deux pièces de paroi annulaires (11, 11a, 33, 33a) qui sont disposées de part et d'autre de ladite pièce d'entraînement et qui peuvent être fixées à l'autre pièce d'entraînement (3, 25, 32, 41) de manière à dépasser de celle-ci, caractérisé en ce que la pièce d'entraînement intérieure (2, 25, 31, 41) et la pièce d'entraînement extérieure (3, 26, 32, 42) comportent chacune une surface portante cylindrique (9 et, respectivement, 9a) qui s'étend de manière continue sensiblement sur toute la périphérie extérieure et intérieure, et en ce que la pièce d'entraînement intérieure ou extérieure (2, 31 ou 26, 42) qui s'étend entre les pièces de paroi (11, 33 ou 11a, 33a) comporte des parties formant épaulements (39) qui peuvent être appliquées contre les deux pièces de paroi (11, 33 ou 11a, 33a) sans possibilité de déplacement dans le sens axial et qui sont destinées à transmettre des forces transversales.

2. Accouplement selon la revendication 1, caractérisé en ce que les pièces de paroi (11, 11a) sont reliées l'une à l'autre par des moyens de fixation (20), qui sont disposés à distance des éléments d'accouplement (4, 4a) et qui sont répartis le long de leurs parties périphériques libres dépassant de la pièce d'entraînement extérieure ou intérieure (3 ou 25), et peuvent être serrées l'une contre l'autre par l'intermédiaire des éléments d'accouplement (4, 4a) et/ou d'une pluralité de pièces d'écartement, ces moyens de fixation (20) traversant chacun une ouverture de passage (22) qui est prévue dans la pièce d'entraînement intérieure ou extérieure (2 ou 26) engagée entre les pièces de paroi (11, 11a) et qui entoure le moyen de fixation correspondant (20) avec un jeu autorisant des déplacements relatifs dans le sens circonférentiel.

3. Accouplement selon la revendication 2, caractérisé en ce que les pièces d'écartement sont constituées par des tubes d'appui (21) qui peuvent être disposés entre les deux pièces de paroi (11, 11a) et qui reçoivent chacun l'un des moyens de fixation (20).

4. Accouplement selon l'une des revendications précédentes, comprenant deux rangées d'éléments d'accouplement (4, 4a) disposées de part et d'autre de la pièce d'entraînement (2) engagée entre les pièces de paroi (11, 11a), les supports (14 et 16) desdits éléments d'accouplement comportant chacun une plaque d'appui (16a) pouvant être appliquée contre ladite pièce d'entraînement (2) ou contre la pièce de paroi voisine (11) et pouvant y être fixée, caractérisé en ce que les plaques d'appui (16a) et le corps formant ressort (15) de chacun des éléments d'accouplement (4) sont formés par des pièces annulaires en forme de segments (figure 7).
